# FASCICULE DE BREVET EUROPEEN

(11) **EP 1 474 620 B1**
(45) Date de publication et mention de la délivrance du brevet: **17.10.2007**
(21) Numéro de dépôt: 03739514.2
(22) Date de dépôt: 07.02.2003
(51) Int. Cl.: F16F 13/14

(54) **ARTICULATION HYDROELASTIQUE AVEC CANAL DE SUPPRESSION A SECTION VARIABLE**
HYDROELASTISCHES GELENK MIT DRUCKENTLASTUNGSKANAL MIT VARIABLEM QUERSCHNITT
HYDROELASTIC JOINT WITH A SUPPRESSION CHANNEL HAVING A VARIABLE CROSS SECTION

(30) Priorité: 12.02.2002 FR 0201679
(43) Date de publication de la demande: 10.11.2004
(73) Titulaire: WOCO AVS SAS, 58300 Decize (FR)
(72) Inventeur: DE FONTENAY, Etienne, F-58300 Decize (FR); SOUYRI, Philippe, F-63260 Saint Gènes du Retz (FR)
(74) Mandataire: Laget, Jean-Loup
(86) Numéro de dépôt international: PCT/FR2003/000387
(87) Numéro de publication internationale: WO 2003/069184

(56) Documents cités:
- EP-A- 0 798 487
- EP-A- 1 046 833
- DE-A- 4 233 705
- DE-C- 4 137 692

## Description

La présente invention concerne une articulation hydroélastique destinée à assembler deux pièces en amortissant des vibrations transmises entre l'une et l'autre.

Le document DE 42 33 705 décrit une telle articulation, du type comportant une armature extérieure et une armature intérieure disposées l'une autour de l'autre et un élément élastiquement déformable agencé entre lesdites armatures de manière à permettre un déplacement relatif entre lesdites armatures, ledit élément élastiquement déformable étant conformé de manière à définir, entre lesdites armatures, un volume contenant un liquide d'amortissement et comprenant au moins deux chambres opposées selon une direction d'amortissement prédéfinie, lesdites chambres étant aptes à communiquer à travers au moins un canal résonant et au moins un canal de surpression qui présente au moins une partie à section variable.

Les articulations de ce type ont deux fonctions principales : offrir des degrés de liberté entres les pièces qu'elles assemblent et atténuer la transmission de vibrations entre l'une et l'autre de ces pièces.

Dans le domaine de la construction des véhicules automobiles, ces articulations ont d'abord été utilisées pour l'amortissement du groupe propulseur par rapport à la structure principale ou caisse d'un véhicule, puis aussi pour l'amortissement des organes de liaison au sol, comme les triangles de suspension des trains de roues, par rapport à la structure principale.

Dans le second cas, ce sont les modes de déplacement dans la direction longitudinale du véhicule dont l'amortissement est particulièrement visé, comme le mouvement de recul d'une roue au contact d'un obstacle. Des sources de vibrations connues au niveau des organes de liaison au sol d'un véhicule sont aussi, par exemple, la non-uniformité des pneumatiques en roulement, les défauts des disques de frein et les dispositifs d'assistance au freinage. Les vibrations des organes de liaison au sol sont généralement caractérisées par des fréquences de résonance relativement basses, par exemple entre 15 et 20 Hz, et des amplitudes relativement élevées, par exemple de l'ordre du millimètre ou plus, de sorte qu'elles sont perceptibles par les occupants du véhicule si incorrectement amorties.

Schématiquement, lorsqu'une sollicitation vibratoire est exercée sur l'une des armatures, au moins selon la direction d'amortissement, celle-ci entraîne une déformation élastique de l'élément déformable, qui est fait par exemple en élastomère, une variation du volume des chambres, une différence de pression entre elles et, finalement, un écoulement de liquide d'amortissement par le canal résonant. Cependant, en raison de l'inertie du liquide et de manière amplifiée par la section limitée du canal résonant, qui provoque une augmentation de la vitesse du liquide, cet écoulement est déphasé avec la force excitatrice, ce qui est à l'origine d'un amortissement de la sollicitation transmise à la deuxième armature. On mesure les caractéristiques d'amortissement de ce type d'articulation par une raideur dynamique qui est le rapport entre la sollicitation transmise à la deuxième armature et le déplacement vibratoire appliqué à la première. Une telle raideur dynamique peut être paramétrée par la fréquence et l'amplitude du déplacement excitateur. En utilisant une notation classique en nombres complexes pour les grandeurs harmoniques déplacement d'entrée et sollicitation de sortie, cette raideur dynamique s'exprime sous la forme d'un nombre complexe caractérisé par une amplitude appelée rigidité et une phase appelée déphasage.

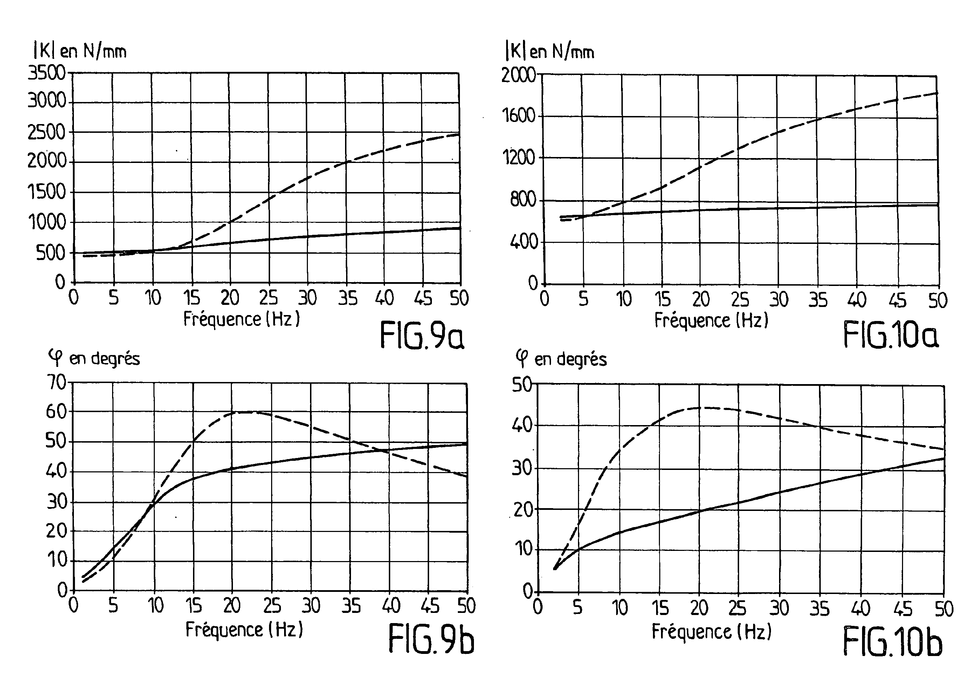

Le comportement de ce type d'articulation en fonction de la fréquence de l'excitation est typiquement le suivant : la rigidité croît avec la fréquence. Le déphasage commence par croître avec la fréquence jusqu'à une valeur maximale atteinte à la fréquence de résonance de pression de l'articulation, et au-delà de laquelle le déphasage décroît ou se stabilise. Ces comportements sont représentés sur les figures 9a et 9b en traits interrompus.

De manière connue, la raideur dynamique peut être adaptée par le choix des composition et géométrie de l'élément déformable, de la viscosité du liquide d'amortissement, qui est par exemple un mélange eau glycol, et de la section et de la longueur du canal résonant, afin de régler la fréquence de résonance de l'articulation. Cette fréquence de résonance correspond à la fréquence à laquelle les performances d'amortissement de l'articulation sont les meilleures, le déphasage étant maximal. L'accroissement de la rigidité de l'articulation avec la fréquence présente un inconvénient, en ce que, dans la zone de fréquence où la rigidité est élevée, typiquement au-delà de la fréquence de résonance de pression, l'articulation transmet très bien les vibrations. Ainsi, lors d'une sollicitation de l'articulation de type choc, par exemple produite lorsque la roue du véhicule rencontre un obstacle comme un joint de raccordement de la chaussée ou une plaque d'égout, cette sollicitation comporte des fréquences moyennes, par exemple de l'ordre de 40 à 50 Hz, qui ne sont pas amorties par le canal résonant.

Le canal de surpression est traditionnellement conçu pour protéger la pièce contre l'éclatement lors de sollicitations très violentes. Il est alors muni d'un clapet de surpression de manière à rester fermé lors du fonctionnement normal de l'articulation et à ne s'ouvrir que sous une très forte différence de pression entre les deux chambres, ce qui constitue une partie à section variable.

Le document susmentionné a proposé d'empêcher le raidissement dynamique de l'articulation en cas de choc, par un choix approprié de la pression d'ouverture du clapet de surpression, une circulation de liquide à travers le canal de surpression. Cependant, il existe deux exigences contradictoires en ce que le clapet doit avoir une étanchéité suffisante pour ne pas supprimer l'effet du canal résonant, notamment aux basses fréquences, et une pression d'ouverture assez faible pour s'ouvrir rapidement en cas de choc.

Le document DE 195 03 445 propose une articulation du type susmentionné, dans laquelle la lèvre du clapet de surpression ne touche pas la paroi opposée du canal de suppression à l'état de repos, de sorte que le canal reste partiellement ouvert. Mais le canal résonant est alors en permanence court-circuité par le canal de surpression, de sorte que le déphasage de l'articulation est détérioré.

Le document EP 1 046 833 mentionne qu'une amélioration du comportement acoustique de l'articulation au passage d'un choc peut être obtenue en réduisant le frottement entre la lèvre du clapet de surpression et la paroi opposée du canal, en munissant la lèvre de clapet d'une zone molle faite d'une matière plus fine ou plus souple que le reste de la lèvre de clapet. Cependant, cette conception entraîne une fragilisation de la lèvre de clapet et augmente son coût de réalisation.

Le document DE 41 37 692 propose une articulation où on agit sur la pression d'ouverture du clapet de surpression en agissant sur un fluide compressible.

Les figures 9a, 9b, 10a et 10b représentent des résultats de mesures de raideur dynamique pour deux articulations de l'art antérieur ayant une fréquence de résonance de l'ordre de 20 Hz et deux valeurs différentes du serrage des clapets de surpression. Les courbes en traits interrompus correspondent à une valeur de serrage classique pour des clapets ayant purement une fonction de sécurité, avec par exemple une compression radiale sur 1 à 1,5mm de la matière des lèvres de clapet. Les courbes en traits continus correspondent à un serrage réduit, les lèvres de clapet étant en simple contact contre la paroi opposée du canal, sans compression sensible lorsque l'articulation est au repos.

Sur les figures 9a et 9b, on a représenté respectivement la rigidité dynamique |K| et le déphasage ϕ des deux articulations soumises à une sollicitation harmonique selon la direction d'amortissement sans précharge statique, en fonction de la fréquence de cette sollicitation. On constate que le desserrage des clapets entraîne, pour les fréquences supérieures à la fréquence de résonance, une diminution de l'ordre de 50% de la rigidité, ce qui est l'effet recherché, une diminution de l'ordre de 30% du déphasage à la fréquence de résonance, ce qui est un inconvénient, mais aussi une amélioration du déphasage aux fréquences supérieures à 40 Hz, ce qui est avantageux. Au total, on peut considérer que les avantages l'emportent sur la diminution du déphasage à la résonance, puisque celui-ci garde une valeur acceptable.

Les figures 10a et 10b représentent les mêmes paramètres que les figures 9a et 9b respectivement, obtenues lorsque les deux articulations sont soumises à une précharge statique additionnelle dans la direction d'amortissement. Si l'effet avantageux du desserrage des clapets sur la rigidité dynamique est conservé, on constate en revanche, une diminution supérieure à 50% du déphasage à la fréquence de résonance, ainsi qu'une perte de déphasage substantielle aux fréquences supérieures. Cette diminution du déphasage est rédhibitoire, en ce qu'elle supprime tout l'intérêt d'utiliser une articulation de type hydroélastique plutôt qu'une simple articulation métal-caoutchouc.

Ainsi, avec les articulations connues, même s'il est possible de trouver un compromis acceptable en terme de pression d'ouverture des clapets de surpression pour améliorer l'amortissement des chocs lorsque l'articulation est déformée autour de sa configuration de repos, ce n'est plus le cas lorsque l'articulation est soumise à une précharge statique additionnelle, par exemple telle que la précharge orientée selon la direction longitudinale du véhicule qui est engendrée par le transfert de masse pesant sur l'articulation d'un organe de liaison au sol lors d'un freinage du véhicule. Le déphasage subsistant est alors insuffisant, notamment autour de la fréquence de résonance.

L'invention a pour but de résoudre au moins partiellement les inconvénients précités, en proposant une articulation qui, déformée autour de sa configuration de repos, assure un amortissement résonant de sollicitations à basse fréquence ainsi qu'un amortissement de sollicitations de type choc, et qui conserve des caractéristiques d'amortissement résonant satisfaisantes sous une précharge additionnelle.

Pour cela, l'invention fournit une articulation hydroélastique destinée à assembler deux pièces en amortissant des vibrations transmises entre l'une et l'autre, ladite articulation comportant une armature extérieure et une armature intérieure disposées l'une autour de l'autre et un élément élastiquement déformable agencé entre lesdites armatures de manière à permettre un déplacement relatif entre lesdites armatures, ledit élément élastiquement déformable étant conformé de manière à définir, entre lesdites armatures, un volume contenant un liquide d'amortissement et comprenant au moins deux chambres opposées selon une direction d'amortissement prédéfinie, lesdites chambres étant aptes à communiquer à travers au moins un canal de surpression qui présente au moins une partie à section variable, caractérisée par le fait qu'elle comporte un moyen de renvoi d'effort pour engendrer, à partir d'un effort tendant à décaler lesdites armatures l'une par rapport à l'autre selon ladite direction d'amortissement, un effort de serrage au niveau de ladite ou d'une desdites partie(s) à section variable dudit canal de surpression, pour s'opposer à la circulation de liquide d'amortissement à travers ledit canal de surpression.

Cette caractéristique permet de concevoir une articulation qui, autour de sa position de repos, permet une circulation de fluide d'amortissement à travers le canal de surpression dès des différences de pression relativement faibles entre les deux chambres, de manière à amortir de manière satisfaisante les sollicitations de type choc et qui, lorsqu'elle est soumise à une précharge selon la direction d'amortissement, restreint la circulation de liquide d'amortissement à travers ledit canal de surpression, ce qui améliore alors l'amortissement résonant produit par l'articulation.

Dans l'articulation selon l'invention, il n'est pas nécessaire de relier les deux chambres par un canal résonant distinct du canal de surpression, car le canal ou les canaux de surpression peuvent remplir une fonction similaire, à savoir permettre un écoulement de liquide entre les deux chambres déphasé avec la force excitatrice et créant un amortissement de la sollicitation transmise à la deuxième armature, par un réglage approprié de leur section ou de leur pression d'ouverture.

Selon un mode de réalisation particulier de l'invention, on prévoit au moins un canal résonant reliant lesdites chambres en dérivation par rapport audit au moins un canal de surpression.

De préférence, la partie à section variable du canal de surpression comporte une lèvre souple de clapet de surpression s'étendant entre deux parois latérales opposées dudit canal de surpression de manière à n'ouvrir ledit canal de surpression que lorsque la différence de pression entre lesdites chambres dépasse un seuil d'ouverture, ledit effort de serrage engendré par le moyen de renvoi d'effort étant apte à comprimer ladite lèvre de clapet entre lesdites parois latérales opposées du canal de surpression, pour accroître ledit seuil d'ouverture.

Cette caractéristique permet de concevoir une articulation munie d'une lèvre de clapet qui, à l'état de repos, est moins serrée entre les deux parois opposées du canal de surpression que dans les articulations traditionnelles. Toutefois, lors de l'application d'une précharge selon la direction d'amortissement, le serrage de cette lèvre de clapet est accru pour restreindre la circulation de fluide d'amortissement à travers le canal de surpression.

Selon une autre caractéristique de l'invention, la partie à section variable du canal de surpression comporte une partie d'entrée dudit canal de surpression ayant une paroi latérale déplaçable par ledit moyen de renvoi d'effort de manière à obturer ladite partie d'entrée. La circulation de fluide d'amortissement à travers le canal de surpression est alors restreinte en obturant cette partie d'entrée du canal de surpression.

Selon un premier mode de réalisation de l'invention, le moyen de renvoi d'effort comporte une surface solidaire de ladite armature intérieure et inclinée pour pousser de la matière dudit élément élastiquement déformable transversalement par rapport à une direction de circulation définie par ledit canal de surpression lors d'un décalage relatif desdites armatures selon ladite direction d'amortissement.

Avantageusement, ladite surface inclinée comporte une portion de la surface extérieure de ladite armature intérieure.

De préférence, on prévoit une armature noyée dans ledit élément élastiquement déformable, ladite armature noyée présentant une ouverture en face de ladite surface inclinée du moyen de renvoi d'effort pour permettre un déplacement de la matière dudit élément élastiquement déformable poussée par ladite surface inclinée à travers ladite armature noyée.

Selon un deuxième mode de réalisation de l'invention, le moyen de renvoi d'effort comporte un organe semi rigide en contact avec au moins l'une desdites chambres, ledit organe comportant une zone de flexion apte à être mise en prise entre lesdites armatures extérieure et intérieure de manière à faire fléchir élastiquement ladite zone de flexion lorsque les armatures intérieure et extérieure sont décalées selon ladite direction d'amortissement, et au moins une zone de serrage apte à pivoter de manière à réduire la section de ladite partie à section variable du canal de surpression en réponse à la flexion de ladite zone de flexion.

Selon une première caractéristique avantageuse du deuxième mode de réalisation, l'organe semi rigide comporte une feuille élastique ondulée sensiblement en forme d'un W dont une arche centrale fait saillie entre lesdites armatures extérieure et intérieure sensiblement parallèlement à ladite direction d'amortissement pour former ladite zone de flexion et dont au moins une aile latérale forme ladite zone de serrage.

Selon une deuxième caractéristique avantageuse du deuxième mode de réalisation, les armatures intérieure et extérieure sont sensiblement cylindriques et présentent une direction axiale commune, ledit organe semi rigide comportant une enveloppe cylindrique élastique dont l'axe est sensiblement parallèle à ladite direction axiale commune et dont la zone de flexion est définie entre deux nervures sensiblement axiales par lesquelles ladite enveloppe s'appuie contre une surface intérieure de l'armature extérieure.

De préférence, la zone de flexion est mise en prise entre ladite armature extérieure et un organe de butée porté par ladite armature intérieure en saillie selon ladite direction d'amortissement.

De préférence, la zone de serrage de l'organe semi rigide forme une cloison latérale de ladite partie à section variable du canal de surpression. Avantageusement dans ce cas, ladite cloison latérale porte une lèvre de clapet s'étendant vers une paroi latérale opposée dudit canal de surpression, ou bien une paroi latérale dudit canal de surpression opposée à ladite cloison latérale de l'organe semi rigide porte une lèvre de clapet et ladite cloison latérale est apte à appuyer sur une extrémité libre de ladite lèvre de clapet pour comprimer ladite lèvre de clapet.

Selon une autre caractéristique de l'invention, on prévoit un canal résonant s'étendant entre lesdites chambres en dérivation de l'autre côté de ladite cloison latérale par rapport audit canal de surpression et ladite cloison latérale comporte une ouverture débouchant dans ledit canal résonant.

De préférence, l'organe semi rigide est apte à faire varier en sens inverse de la section variable dudit canal de surpression une section dudit canal résonant définie entre ladite cloison latérale et ladite armature extérieure, de manière à accroître une fréquence de résonance dudit canal résonant lorsque les armatures intérieure et extérieure sont décalées selon ladite direction d'amortissement.

Cette caractéristique permet, lorsque l'articulation est utilisée sur un organe de liaison au sol de véhicule et est soumise à une précharge selon la direction d'amortissement lors d'un freinage, d'obtenir une évolution de la fréquence de résonance du canal résonant conforme à l'évolution des fréquences propres de la suspension du véhicule, lesquelles augmentent lors du freinage. Ainsi, l'amortissement procuré par l'articulation est amélioré du fait que la fréquence de résonance de l'articulation et les fréquences propres de la suspension peuvent rester accordées sur une plage de fonctionnement élargie, aussi bien en l'absence qu'en présence d'un freinage.

Avantageusement, ledit élément élastiquement déformable présente deux cloisons d'extrémité reliant de manière étanche lesdites armatures intérieure et extérieure au niveau d'extrémités opposées de celles-ci pour fermer ledit volume de liquide d'amortissement, ledit organe semi rigide étant conçu de manière à assurer une étanchéité sensible entre lesdites cloisons d'extrémité et des bords dudit organe semi rigide. Ainsi, un débit de fuite court-circuitant le canal de surpression est réduit.

Selon un troisième mode de réalisation de l'invention, on prévoit une armature supplémentaire agencée autour de ladite armature extérieure, ledit moyen de renvoi d'effort comportant un circuit hydraulique défini entre ladite armature extérieure et ladite armature supplémentaire, ledit circuit hydraulique comportant un premier réservoir séparé d'une desdites chambres de fluide d'amortissement par une première membrane souple montée dans une première ouverture de ladite armature extérieure en face d'un organe de butée porté par ladite armature intérieure en saillie selon ladite direction d'amortissement, et un second réservoir ayant une paroi formée par une seconde membrane souple montée dans une seconde ouverture de ladite armature extérieure, ladite seconde membrane souple formant une paroi latérale extérieure de ladite partie à section variable du canal de surpression, ledit second réservoir étant relié audit premier réservoir de manière qu'une déformation de ladite première membrane vers l'extérieur sous la poussée dudit organe de butée, entraîne par transmission de pression hydraulique une déformation vers l'intérieur de ladite seconde membrane, pour restreindre la section dudit canal de surpression.

De préférence, un second élément élastiquement déformable est agencé entre ladite armature supplémentaire et ladite armature extérieure, ledit circuit hydraulique étant ménagé dans ledit second élément élastiquement déformable.

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence au dessin annexé. Sur ce dessin :
- la figure 1 est une vue d'une articulation selon le premier mode de réalisation de l'invention, en coupe longitudinale selon la ligne I-I de la figure 2,
- la figure 2 est une vue de l'articulation de la figure 1, représentée en coupe transversale selon la ligne II-II,
- la figure 3 est une vue analogue à la figure 2 représentant une articulation selon une première variante du deuxième mode de réalisation de l'invention,
- la figure 4 est une vue en perspective d'un organe semi rigide de l'articulation de la figure 3,
- la figure 5 est une vue analogue à la figure 2 représentant une articulation selon une deuxième variante du deuxième mode de réalisation de l'invention,
- la figure 6 est une vue en perspective d'un organe semi rigide de l'articulation de la figure 5,
- la figure 7 est une vue analogue à la figure 2 représentant une articulation selon une troisième variante du deuxième mode de réalisation de l'invention,
- la figure 8 est une vue analogue à la figure 2 représentant une articulation selon le troisième mode de réalisation de l'invention,
- les figures 9a et 9b représentent, pour deux articulations de l'art antérieur, la rigidité dynamique et le déphasage observés sous une sollicitation harmonique sans précharge statique,
- les figures 10a et 10b représentent, pour les deux articulations de l'art antérieur, la rigidité dynamique et le déphasage observés sous une sollicitation harmonique avec précharge statique,
- la figure 11 est une vue partielle en coupe transversale d'une variante de réalisation de l'articulation représentée sur la figure 3,
- la figure 12 est une vue partielle en coupe transversale d'une variante de réalisation de l'articulation représentée sur la figure 5,
- les figures 13 et 14 sont des vues partielles en coupe transversale de variantes de réalisation de l'articulation représentée sur la figure 7.

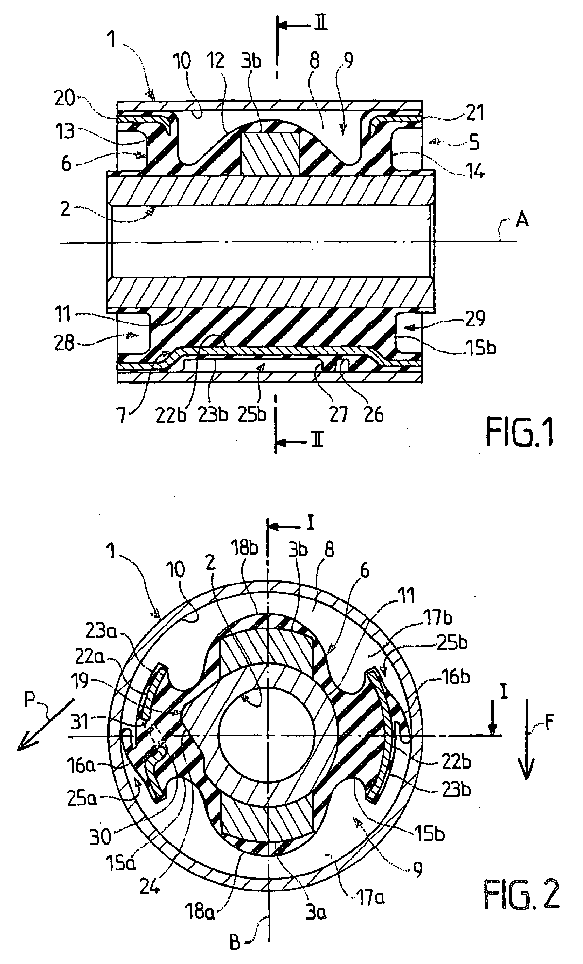

En référence aux figures 1 et 2, on décrit maintenant un premier mode de réalisation de l'invention. Dans ce mode de réalisation, l'articulation est de forme extérieure sensiblement cylindrique à section circulaire et possède une armature externe 1 et une armature interne 2, qui sont sensiblement cylindriques et coaxiales d'axe A. Ces armatures sont rigides et faites par exemple en métal ou en plastique. Les armatures externe 1 et interne 2 sont destinées à être fixées respectivement à deux pièces d'une structure (non représentées) pour assembler ces pièces et amortir les transmissions de vibrations entre elles. Pour faciliter le montage de l'articulation entre les deux pièces, l'armature interne 2 dépasse longitudinalement hors de l'armature externe 1 aux deux extrémités de l'articulation.

Entre les armatures interne 2 et externe 1 est monté un ensemble 5 faisant ressort à amortissement hydraulique formé par un élément élastiquement déformable 6 en une composition d'un ou plusieurs élastomère(s) muni d'une armature noyée 7, et par un liquide d'amortissement hydraulique 8 remplissant un volume étanche 9 défini entre l'élément déformable 6 et la surface intérieure 10 de l'armature externe 1. L'élément déformable 6 présente un forme globale de manchon cylindrique creux adhérisé par sa surface intérieure sur la surface extérieure 11 de l'armature interne 2 et évidé sur sa surface extérieure 12 pour former le volume 9.

La conformation extérieure de l'élément déformable 6 est la suivante : l'élément déformable 6 est évidé dans une partie centrale entre ses deux extrémités axiales, de manière à former au niveau de ses extrémités axiales deux parois annulaires 13 et 14 joignant les armatures interne 2 et externe 1 pour fermer de manière étanche le volume 9. Deux bossages axiaux diamétralement opposés 15a et 15b joignent l'une et l'autre des parois 13 et 14 de manière à diviser le volume 9 en deux chambres sensiblement semi-annulaires 17a et 17b symétriques par rapport à un plan contenant l'axe A de l'articulation et les lignes médianes des bossages 15a et 15b. Les deux chambres 17a et 17b sont diamétralement opposées selon une direction B qui définit la direction d'amortissement hydraulique de l'ensemble 5.

Le fond de chaque chambre 17a et 17b est formé avec une excroissance respective 18a et 18b en saillie radialement vers l'extérieur depuis le centre de la chambre, qui constitue un organe de butée apte à venir en contact contre la surface intérieure 10 de l'armature externe 1 lorsque les armatures 1 et 2 sont décalées l'une par rapport à l'autre selon la direction B. Au delà d'un certain seuil de décalage, une des excroissances 18a et 18b, selon le sens du décalage, s'appuie contre la surface intérieure 10 de manière à accroître la raideur de l'articulation dans la direction B. Ainsi, les excroissances 18a et 18b empêchent une déformation excessive de l'élément déformable 6 dans la direction B pour éviter un endommagement des parois 13 et 14 lorsque l'articulation est soumise à une sollicitation radiale très importante.

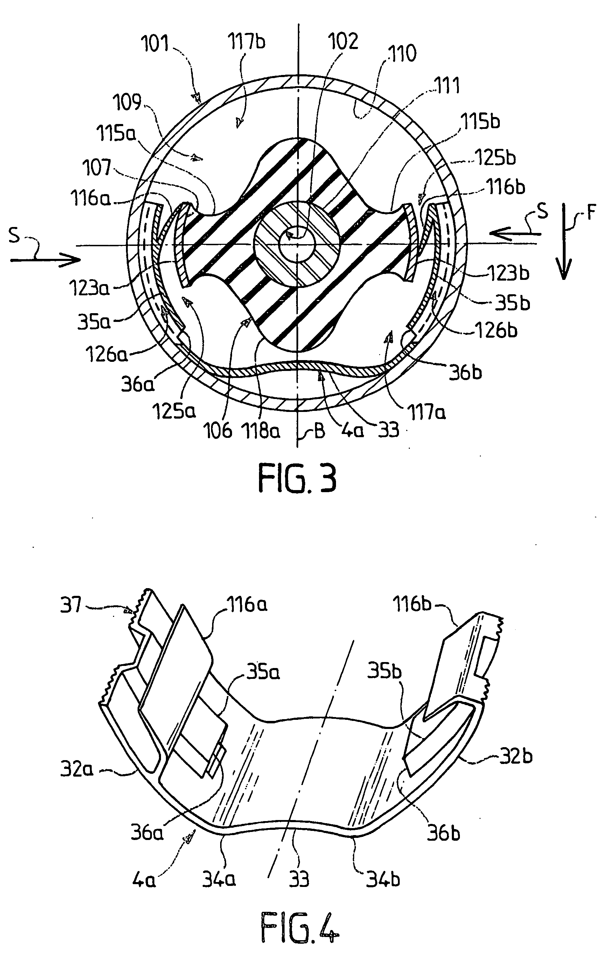

Dans le mode de réalisation représenté aux figures 1 et 2, chacune des excroissances 18a et 18b de l'élément déformable 6 renferme en son centre une rondelle rigide 3a, respectivement 3b, qui est appuyée contre la surface extérieure 11 de l'armature interne 2 et est noyée dans la masse de la matière déformable. Les rondelles 3a et 3b, par exemple métalliques, servent à rigidifier les excroissances 18a et 18b selon la direction B, de manière à rendre plus marqué le raidissement de l'articulation lors de l'entrée en contact d'une des excroissances 18a et 18b avec la surface intérieure 10. En variante, les excroissances 18a et 18b peuvent aussi être réalisées intégralement dans la matière de l'élément déformable 6, sans rondelle rigide, comme dans le mode de réalisation représenté à la figure 3, de manière à rendre le raidissement de l'articulation plus progressif.

L'armature 7 est noyée dans la masse élastique de l'élément déformable 6. L'armature 7 consiste en une portion de tube de sensiblement même longueur que l'armature externe 1 et coaxiale à celle-ci, pourvue dans sa partie centrale de deux ouvertures couvrant chacune un large secteur angulaire, par exemple d'environ 120°, autour de l'axe A. Chacune de ces ouvertures correspond à l'emplacement d'une des chambres 17a et 17b et permet le passage de l'excroissance 18a ou 18b pour la venue en butée de celle-ci contre l'armature externe 1. Au niveau de ses extrémités axiales, l'armature 7 forme donc deux bagues 20 et 21, qui sont noyées à la périphérie des parois 13 et 14 respectivement et, joignant les bagues 20 et 21, deux bandes 22a et 22b parallèles à l'axe A, qui sont légèrement retreintes radialement par rapport aux bagues 20 et 21, et sont noyées dans les bossages 15a et 15b respectivement. L'élément déformable 6 comporte aussi, sur la surface extérieure des parois d'extrémités 13 et 14, deux évidements annulaires 28 et 29 formés dans la masse de l'élastomère, entre l'armature interne 2 et l'armature noyée 7.

Les bandes 22a et 22b de l'armature noyée 7 sont recouvertes sur leur surface extérieure d'une fine couche de la matière de l'élément déformable 6, qui forme la surface de sommet 23a et 23b des bossages 15a et 15b respectivement. Chacune des surfaces 23a et 23b présente donc une forme en secteur cylindrique qui suit avec un certain espacement radial la surface intérieure 10 de l'armature externe 1. Cet espacement radial, sensiblement égal à la quantité de retreinte radiale des bandes 22a et 22b, définit des canaux de communication entre les deux chambres 17a et 17b.

Plus précisément, entre la surface de sommet 23b et la surface intérieure 10 sont définis un canal de surpression 25b et un canal résonant 26, qui s'étendent parallèlement selon la direction périphérique de l'armature externe 1 et sont séparées par une nervure 27 intégralement formée dans la masse de l'élément déformable 6. Le canal résonant 26 est un canal de section réduite mettant en communication les deux chambres 17a et 17b pour engendrer une résonance de pression à une fréquence de résonance donnée, selon la technique connue. Entre la surface de sommet 23a et la surface intérieure 10 sont définis un canal de surpression 25a et un autre canal résonant, non représenté, identique au canal résonant 26. En variante, le canal de surpression 25a peut occuper toute la longueur axiale de la surface 23a sans second canal résonant.

Chaque surface de sommet 23a et 23b porte, le long d'une ligne axiale qui correspond sensiblement au plan médian du bossage 15a et 15b respectif, une lèvre de clapet souple 16a et 16b respectivement, visible sur la figure 2. Les lèvres de clapet 16a et 16b s'étendent sur toute la largeur des canaux de surpression 25a et 25b et sont formées d'un seul tenant dans la matière de l'élément déformable 6. La lèvre de clapet 16b est omise à la figure 1. Au repos, une partie d'extrémité des lèvres 16a et 16b est en contact contre la surface intérieure 10 de l'armature externe 1 de manière à obturer hermétiquement les canaux de surpression 25a et 25b. Les deux lèvres 16a et 16b ont une orientation hélicoïdale dans un même sens de rotation autour de l'axe A. En cas de sollicitation de l'articulation dans une direction radiale, se traduisant par une surpression suffisante dans l'une des chambres, par exemple la chambre 17a, l'une de ces lèvres, 16a selon l'exemple, est poussée dans le sens de son enroulement, ce qui entraîne sa flexion contre le bossage qui la porte, 15a selon l'exemple, et l'ouverture d'une communication entre les deux chambres à travers le canal de surpression 25a, de sorte que la pression de liquide peut s'équilibrer. L'autre lèvre, 16b selon l'exemple, étant au contraire poussée par la surpression de liquide dans le sens de son déroulement, est maintenue contre l'armature externe 1 et n'ouvre pas de communication entre les deux chambres à travers le canal 25b. En cas de sollicitation dans le sens inverse, le fonctionnement des deux lèvres 16a et 16b est permuté.

Sous le bossage 15a, l'armature interne 2 présente, sur sa surface extérieure 11, un bossage 19 parallèle à l'axe A, dont un versant forme une surface plane 24 inclinée, par exemple d'un angle de 20 à 60°, de préférence environ 45°, par rapport à la direction d'extension radiale du bossage 15a. La bande axiale 22a de l'armature noyée 7 présente aussi une partie d'extension axiale 30 sous jacente à la lèvre de clapet 16a qui a été rétreinte radialement vers l'armature interne 2, de manière à former un pan incliné parallèle à la surface 24, lequel a été ensuite partiellement supprimé en pratiquant une découpe 31.

La fermeture du volume 9 se fait par emmanchement à force de l'armature externe 1 sur l'élément déformable 6 après remplissage par le liquide d'amortissement. Le remplissage peut être effectué par immersion de l'articulation dans le liquide. Les deux bagues 20 et 21 confèrent à l'élément déformable 6 une forte raideur radiale au niveau des parois 13 et 14 pour assurer un contact étanche avec l'armature externe 1. L'élément déformable 6 n'est pas adhérisé sur l'armature externe 1 mais retenu dans celle-ci par le frottement engendré par une fine pellicule de sa matière écrasée radialement entre la surface 10 et les bagues 20 et 21.

La pression d'ouverture des lèvres de clapet 16a et 16b peut être adaptée par une conception correspondante de celles-ci, en réglant leur extension axiale et radiale, leur épaisseur et la nature de la matière élastique utilisée. En l'absence de toute sollicitation statique décalant les armatures 1 et 2 l'une par rapport à l'autre selon la direction d'amortissement B, les lèvres de clapet 16a et 16b sont conçues de manière à présenter un niveau de précontrainte en compression contre l'armature 1 assez bas pour permettre une ouverture des canaux de surpression lorsque l'articulation est soumise à une sollicitation de type choc, comportant par exemple une composante principale à une fréquence entre 40 et 50 Hz avec une amplitude de l'ordre de quelques dixièmes de millimètres. Ce niveau de précontrainte est généralement plus faible que celui utilisé lorsque les clapets de surpression n'ont qu'une fonction de sécurité, qui évite l'éclatement de l'articulation sous très forte sollicitation. La précontrainte en compression des lèvres de clapet 16a et 16b contre l'armature 1 peut aussi être rendue sensiblement nulle, de préférence sans toutefois ménager de passage entre les deux chambres à travers les canaux de surpression en position de repos.

En fonctionnement, la lèvre de clapet 16a présente plusieurs niveaux de serrage selon le type de sollicitation auquel l'articulation est soumise. En effet, lorsque l'articulation est soumise à une sollicitation différentielle statique ou quasi statique, représentée par la flèche F à la figure 2, qui décale l'armature interne 2 vers la chambre 17a, la surface inclinée 24 repousse la matière de l'élément déformable 6 sous jacente à la lèvre de clapet 16a à travers la découpe 31, de manière à déplacer la base de la lèvre 16a à la fois vers l'extérieur dans la direction radiale et vers l'entrée du canal de surpression 25a dans la direction périphérique. Cet effort de poussée, représenté par la flèche P à la figure 2, augmente le serrage de la lèvre de clapet 16a contre l'armature externe 1, et accroît donc sa pression d'ouverture.

On notera que le résultat est similaire si la sollicitation F décale l'armature interne 2 vers le bossage 15a. En revanche, en l'absence de la découpe 31, un décalage de l'armature interne 2 ne pourrait pas modifier le serrage de la lèvre de clapet 16a, car celle-ci est portée par l'armature noyée 7 qui occupe une position sensiblement fixe par rapport à l'armature externe 1 du fait de la rigidité des armatures et de la liaison entre elles au niveau des bagues 20 et 21.

En présence de la sollicitation statique F, lorsque l'articulation est soumise à une sollicitation vibratoire autour de cette configuration décalée, la circulation du liquide d'amortissement 8 depuis la chambre 17a vers la chambres 17b à travers le canal de surpression 25a est restreinte par l'accroissement de pression d'ouverture de la lèvre de clapet 16a et elle est interdite à travers le canal de surpression 25b. Par conséquent, la circulation de liquide d'amortissement à travers les canaux résonants est accrue, ce qui améliore l'amortissement procuré par l'articulation, notamment aux fréquences voisines de la fréquence de résonance des canaux résonants. En d'autres termes, le débit de fuite à travers le canal de surpression 25a, qui avait était favorisé en desserrant la lèvre de clapet 16a, est combattu lors de l'application d'une précharge statique selon la direction d'amortissement par le resserrage de la lèvre de clapet contre l'armature externe 1. De ce fait, le déphasage de l'articulation sous précharge statique est ré-augmenté jusqu'à un niveau satisfaisant, par exemple de l'ordre de 30 à 50° à la fréquence de résonance.

Bien sûr, un fonctionnement analogue du clapet de surpression 16b peut être obtenu en symétrisant l'articulation par rapport à l'axe A.

En référence aux figures 3 à 7, on décrit maintenant un deuxième mode de réalisation de l'invention. Les éléments identiques ou similaires à ceux du premier mode de réalisation portent le même chiffre de référence augmenté de 100 et ne seront pas décrits à nouveau. Dans ce deuxième mode de réalisation, l'armature interne 102 présente une surface extérieure 111 cylindrique circulaire et l'armature noyée 107 ne présente pas de découpe au niveau du bossage 115a. Un organe semi rigide, réalisé par exemple en métal ou en matière plastique, notamment en polyamides, est mis en contact avec le volume 109.

On décrit maintenant une première variante du deuxième mode de réalisation en référence aux figures 3 et 4. Les bossages 115a et 115b ne portent ni lèvre de clapet, ni nervure. L'organe 4a comporte une feuille de base sensiblement rectangulaire présentant des ondulations longitudinales qui lui confèrent une section transversale sensiblement en forme de W, avec deux ailes latérales 32a et 32b incurvées d'une courbure semblable à celle de la surface intérieure 110 de l'armature externe 101, et une arche intermédiaire 33 faiblement incurvée en sens opposé qui se raccorde aux ailes 32a et 32b au niveau de deux coudes 34a et 34b respectivement. Chaque aile latérale 32a et 32b comporte, au niveau d'une partie médiane, une portion 35a et 35b qui est en décrochement vers le centre de courbure de l'aile latérale et s'étend depuis le bord d'extrémité de l'aile sensiblement jusqu'au coude 34a ou 34b, et qui se termine par une ouverture respective 36a et 36b à son l'extrémité voisine dudit coude. Pour chaque aile latérale 32a et 32b de la feuille de base une lèvre de clapet, 116a et 116b respectivement, est fixée sur la face située à l'intérieur de la courbure de l'aile, de préférence formée d'un seul tenant avec la feuille de base. Les lèvres de clapet 116a et 116b s'étendent selon toute la longueur de la feuille de base en passant par dessus les portions en décrochement 35a et 35b.

Chaque lèvre 116a et 116b comporte, de part et d'autre de la portion en décrochement de l'aile 32a ou 32b qui la porte, une partie de base sensiblement perpendiculaire à l'aile et, au dessus de la portion en décrochement, une partie d'extrémité raccordée par un coude à la partie de base et orientée obliquement le long de l'aile en s'écartant légèrement de celle-ci. La partie d'extrémité présente une épaisseur décroissante. La lèvre 116a a sa partie d'extrémité orientée vers l'extrémité de l'aile 32a et la lèvre 116b a sa partie d'extrémité orientée vers l'arche intermédiaire.

L'organe 4a est inséré dans le volume 109 en l'enroulant transversalement autour de l'élément déformable 106, l'arche intermédiaire 33 s'étendant dans la chambre 117a transversalement à la direction d'amortissement B et les deux ailes 32a et 32b s'engageant entre la surface de sommet 123a et 123b des bossages 115a et 115b et l'armature externe 101. La surface extérieure des ailes 32a et 32b s'appuie contre la surface intérieure 110 jusqu'au niveau des coudes 34a et 34b. Elle est munie de rainurages 37 pour amoindrir le frottement contre la surface intérieure 110. L'arche intermédiaire 33 s'écarte de la surface intérieure 110 et fait légèrement saillie au centre de la chambre 117a vers l'excroissance 118a de l'élément déformable 106. Dans l'espace radial entre la surface de sommet 123a et 123b et l'armature externe 101, chaque aile 32a ou 32b forme une cloison séparant un canal de surpression 125a ou 125b, défini entre ladite cloison et la surface de sommet 123a ou 123b, d'un canal résonant 126a ou 126b, défini entre la surface intérieure 110 et la portion de décrochement 35a ou 35b. L'extrémité des lèvres de clapet 116a et 116b vient en contact avec la surface de sommet 123a ou 123b respective, de manière à obturer hermétiquement les canaux de surpression 125a et 125b. Le serrage des lèvres de clapet 116a et 116b au repos est réglé selon les mêmes critères que dans le premier mode de réalisation.

La longueur de l'organe 4a est sensiblement égale à la longueur axiale du volume 109, de manière à assurer un certain niveau d'étanchéité entre les bords d'extrémités longitudinales de la feuille de base et les parois d'extrémités axiales du volume 109, de sorte que le débit de fuite court-circuitant les canaux en passant sous l'arche 33 soit suffisamment limité pour ne pas grever les propriétés d'amortissement de l'articulation. Cependant, l'organe 4a est aussi conçu et agencé de manière à ne pas endommager les parois d'extrémités axiales du volume 109, lesquelles constituent en général une zone de fragilité des articulations hydroélastiques.

Lors d'un décalage relatif des armatures 101 et 102 entraînant une diminution de volume de la chambre 117a, engendré par la sollicitation F, l'excroissance 118a vient appuyer au milieu de l'arche 33 de manière à la faire fléchir élastiquement en direction de la surface 110. L'organe 4a se déforme en flexion de manière à rapprocher les ailes latérales 32a et 32b l'une de l'autre par pivotement de celles-ci autour des coudes 34a et 34b, lesquels forment des axes de pivotement, éventuellement aptes à glisser légèrement le long de la surface 110. Le pivotement des ailes latérales 32a et 32b engendre un effort de serrage, indiqué par les flèches S de la figure 3, qui accroît la pression d'ouverture des lèvres de clapet 116a et 116b.

Conjointement, lors du pivotement des ailes latérales 32a et 32b vers l'intérieur, la section transverse des canaux résonants 126a et 126b s'accroît, sauf au niveau de leurs entrées délimitées par les ouvertures 36a et 36b. Cette variation de configuration a pour effet d'accroître la fréquence de résonance de ces canaux résonants.

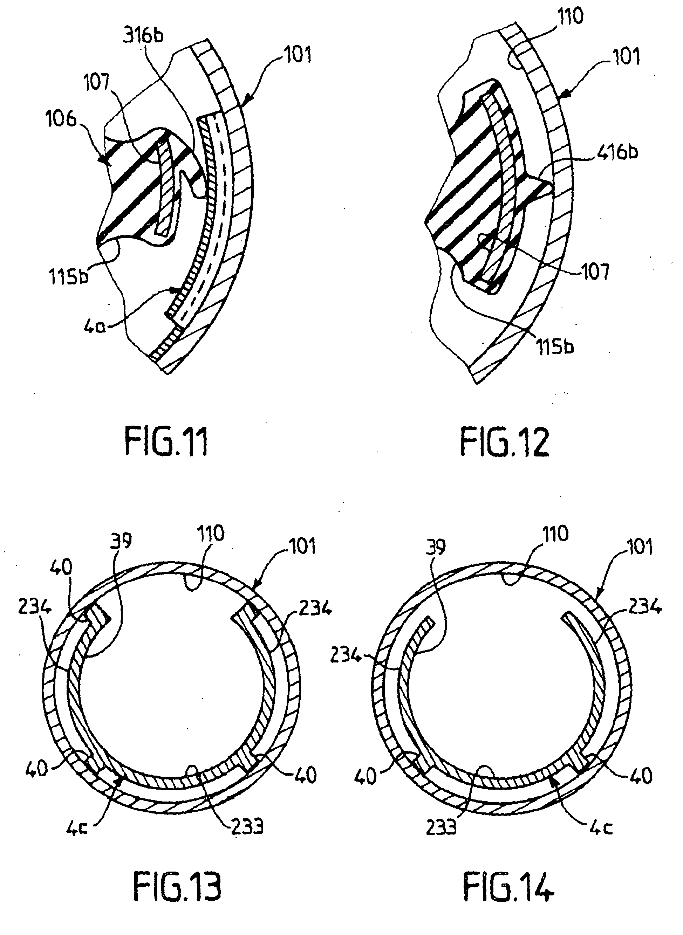

La figure 11 représente, en vue partielle, une réalisation alternative de la première variante susmentionnée, dans laquelle les lèvres de clapet 116a et 116b portées par l'organe 4a sont supprimées et remplacées par des lèvres de clapet similaires aux lèvres 16a et 16b représentées sur la figure 2 et portées par les bossages de l'élément déformable 106. La figure 11 représente une telle lèvre de clapet 316b portée par le bossage 115b et surmoulée sur l'armature noyée 107. L'autre lèvre peut être réalisée de manière analogue.

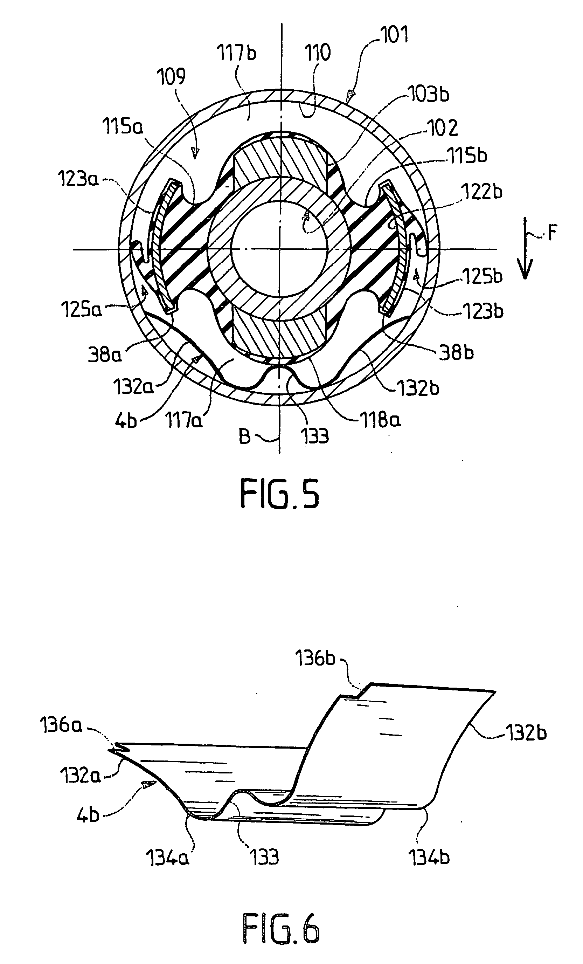

On décrit maintenant une deuxième variante du deuxième mode de réalisation en référence aux figures 5 et 6. Dans cette variante, les lèvres de clapet sont portées par les bossages 115a et 115b et leur serrage au repos est réglé selon les mêmes critères que dans le premier mode de réalisation.

Dans la deuxième variante, l'organe 4b comporte une feuille métallique sensiblement rectangulaire présentant des ondulations longitudinales qui lui confèrent une section transversale sensiblement en forme de W, avec deux ailes latérales 132a et 132b incurvées et une arche intermédiaire 133 incurvée dans le même sens qui se raccorde aux ailes 132a et 132b au niveau de deux coudes 134a et 134b incurvées en sens opposés à l'arche intermédiaire 133.

Les ailes latérales 132a et 132b sont moins larges que les ailes 32a et 32b de la première variante et ne s'engagent que dans une partie d'entrée des canaux de surpression 125a et 125b. Cette partie d'entrée présente une section variable définie entre l'aile 132a ou 132b et un bord 38a ou 38b de chacun des bossages 115a et 115b, qui comporte un bord de la bande 122a ou 122b recouvert d'une fine pellicule de matière de l'élément déformable 106.

Lors d'un décalage relatif des armatures 101 et 102, engendré par la sollicitation F et entraînant une diminution de volume de la chambre 117a, l'excroissance 118a vient appuyer au milieu de l'arche 133 de manière à la faire fléchir élastiquement en direction de la surface 110. L'organe 4b se déforme par glissement des coudes 134a et 134b le long de la surface 110 et par pivotement résultant des ailes latérales 132a et 132b l'une vers l'autre, de sorte que la section d'entrée des canaux de surpression diminue jusqu'à être complètement fermée lorsqu'une partie d'extrémité de chacune des ailes latérales 132a et 132b vient en contact hermétique contre le bord 38a ou 38b.

La longueur de l'organe 4b étant sensiblement égale à la longueur axiale du volume 109, de manière à assurer un certain niveau d'étanchéité entre les bords d'extrémités longitudinales de la feuille et les parois d'extrémités axiales du volume 109, les ailes latérales 132a et 132b en contact avec les bords 38a et 38b obturent hermétiquement l'entrée des canaux de surpression 125a et 125b du côté de la chambre 117a. Cependant, une découpe 136a ou 136b ménagée dans la partie d'extrémité de chacune des ailes latérales 132a et 132b permet de ne pas obturer les canaux résonants, le bord de la découpe venant en contact contre la nervure de séparation entre canal résonant et canal de surpression.

De même que dans le premier mode de réalisation, en présence de la sollicitation statique F décalant l'armature interne 102 vers la chambre 117a et lorsque l'articulation est soumise à une sollicitation vibratoire, la circulation du liquide d'amortissement à travers les canaux de surpression 125a et 125b est interdite par l'organe 4b obturant l'entrée de ceux-ci, de sorte que la circulation de liquide d'amortissement à travers les canaux résonants est accrue.

Bien sûr, un fonctionnement analogue de l'articulation peut être obtenu lorsque l'armature interne 102 est décalée vers la chambre 117b en prévoyant un deuxième organe 4b dans celle-ci.

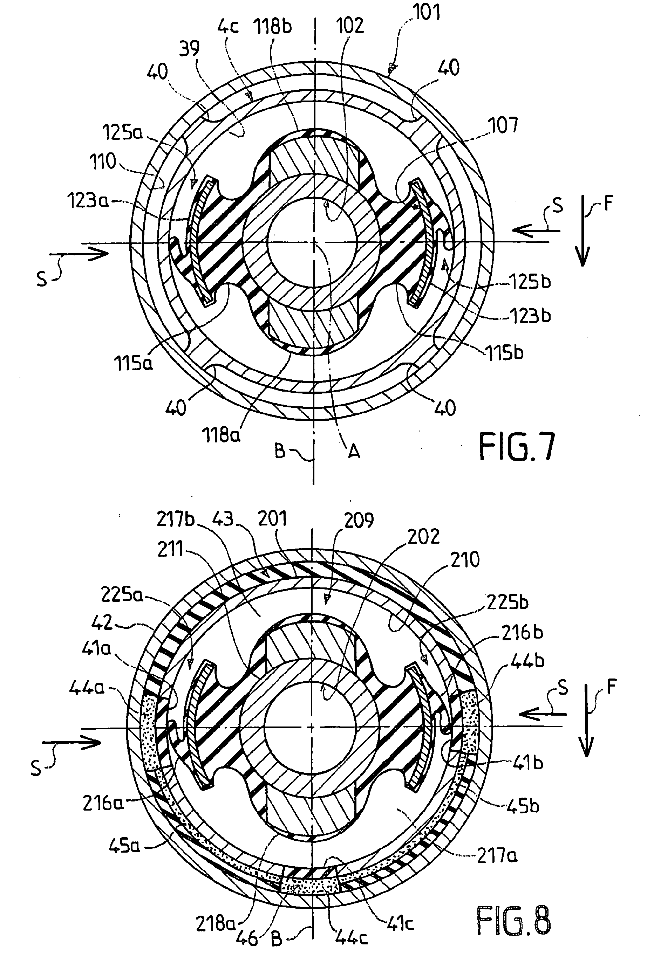

On décrit maintenant une troisième variante du deuxième mode de réalisation en référence à la figure 7. Dans cette variante, l'organe semi rigide 4c comporte un tube cylindrique circulaire à section élastiquement déformable agencé autour de l'élément déformable 106 à l'intérieur de l'armature externe 101. Les canaux de surpression 125a et 125b sont délimités entre les surfaces de sommets 123a et 123b, qui portent les lèvres de clapet, et la surface intérieure 39 de l'organe 4c.

Sur toute sa longueur axiale, l'organe 4c s'appuie sur la surface intérieure 110 par des nervures axiales 40, par exemple au nombre de quatre, qui sont régulièrement réparties à la périphérie de l'organe 4c. Dans l'exemple représentés, les positions des nervures axiales 40 sont décalées à environ 45° autour de l'axe A par rapport à la direction d'amortissement B.

Au niveau des extrémités axiales de l'organe 4c, deux configurations alternatives sont prévues. Dans la première configuration, la longueur de l'organe 4c est sensiblement égale à la longueur axiale du volume 109, et celui-ci s'étend uniquement à l'intérieur du volume 109, entre les parois d'extrémités axiales du volume 109 (références 13 et 14 de la figure 1). On prévoit alors un certain niveau d'étanchéité entre lesdites parois et les bords d'extrémités longitudinales de l'organe 4c de manière à limiter le débit de fuite pouvant court-circuiter les canaux résonants en passant entre l'organe 4c et l'armature externe 101.

Dans la deuxième configuration, la longueur de l'organe 4c est sensiblement égale à la longueur axiale de l'armature noyée 107. Les bagues d'extrémités de l'armature 107 (références 20 et 21 de la figure 1) sont emmanchées à force dans l'organe 4c, au lieu de l'armature externe 101. L'armature externe 101 est alors retenue autour de l'organe 4c par serrage des nervures 40.

L'organe 4c est conçu pour pouvoir se déformer, au moins au niveau d'une portion centrale, de manière à s'ovaliser sous la poussée de l'excroissance 118a ou 118b venant en appui contre la surface 39 entre deux nervures 40. Ainsi, lorsque l'articulation est soumise à la sollicitation statique de précharge F, l'organe 4c fléchit élastiquement de manière à prendre, au moins au niveau d'une portion centrale, une section sensiblement elliptique de grand axe parallèle à la direction d'amortissement B et de petit axe correspondant à la direction radiale des bossages 115a et 115b. De ce fait, la surface 39 exerce un effort de serrage accru, indiqué par les flèches S, sur les lèvres de clapet. Dans le cas de la deuxième configuration précitée, les parties d'extrémités de l'organe 4c sont conçues pour continuer à assurer un contact étanche avec l'élément déformable 6 même à l'état déformé de l'organe 4c.

De même que dans le premier mode de réalisation, en présence de la sollicitation statique F, lorsque l'articulation est soumise à une sollicitation vibratoire, la circulation du liquide d'amortissement à travers les canaux de surpression 125a et 125b est restreinte par le serrage accru des lèvres de clapet 116a et 116b, de sorte que la circulation de liquide d'amortissement à travers les canaux résonants est favorisée.

L'organe 4c n'a pas nécessairement une forme tubulaire complète, mais peut aussi prendre la forme d'un secteur semi tubulaire avec une section transversale en forme d'arc de cercle plus ou moins étendu. Les figures 13 et 14 représentent, en vue partielle, deux formes de réalisation correspondantes de l'organe 4c pour la troisième variante susmentionnée. Sur ces figures, l'armature interne et l'élément déformable ne sont pas représentés car ils sont identiques à la réalisation de la figure 7.

Sur la figure 13, l'organe 4c présente une forme de secteur semi tubulaire avec une section transversale en forme d'arc de cercle étendu sur environ 270°, pouvant être obtenue en supprimant la paroi de l'organe tubulaire 4c de la figure 7 entre deux des nervures 40. La paroi médiane 233 de l'organe 4c de la figure 13, dans le sens de la circonférence, constitue une zone de flexion privilégiée qui est positionnée en face de l'excroissance 118a, visible sur la figure 7, pour produire une flexion de l'organe 4c tendant à rapprocher les ailes 234 l'une de l'autre sous l'action de la sollicitation de précharge F susmentionnée. Le fonctionnement de cette réalisation de l'organe 4c est similaire à celui de l'organe 4a décrit ci-dessus. La réalisation de l'organe 4c représentée sur la figure 14 est identique, hormis la suppression de deux nervures 40 aux extrémités libres des ailes 234. Ainsi, il ne reste que deux nervures axiales 40 en appui contre la surface 110 de part et d'autre de la paroi médiane 233.

L'étendue angulaire de l'organe 4c et le nombre des nervures 40 sont choisis plus ou moins grands, pour régler la souplesse de l'organe 4c. De préférence, cette étendue est supérieure à 180°, de manière à pouvoir toujours assurer un contact satisfaisant avec les lèvres de clapet. Toutefois, la position desdites lèvres peut être modifiée et l'étendue de l'organe 4c adaptée de manière correspondante.

En référence à la figure 8, on décrit maintenant un troisième mode de réalisation de l'invention. Les éléments identiques ou similaires à ceux du premier mode de réalisation portent le même chiffre de référence augmenté de 200 et ne seront pas décrits à nouveau.

Au niveau des zones d'appui des extrémités des lèvres de clapet 216a et 216b, l'armature externe 201 est percée d'ouvertures, par exemple circulaires, dans lesquelles sont fixées de manière étanche des membranes souples 41a et 41b, par exemple par adhérisation. Une autre ouverture pourvue d'une membrane 41c est prévue en face de l'excroissance 218a, dans la direction radiale B. Une armature supplémentaire 42, cylindrique à section circulaire et coaxiale à l'armature externe 201, est fixée autour de celle-ci par l'intermédiaire d'une deuxième élément élastique 43, par exemple une couche d'élastomères. Dans la matière du deuxième élément élastique 43, entre les armatures 201 et 42, est creusé un circuit étanche 46 qui est rempli d'une fluide faiblement compressible, par exemple le liquide d'amortissement ou un autre fluide liquide ou gazeux, et qui comporte un réservoir de fluide 44a, 44b et 44c derrière chacune des membranes 41a, 41b et 41c et deux conduits de liaisons 45a et 45b reliant le réservoir 44c aux réservoirs 44a et 44b respectivement.

Lors d'un décalage relatif suffisant des armatures 201 et 202 engendré par la sollicitation F dans le sens d'une diminution de volume de la chambre 217a, l'excroissance 218a vient appuyer sur la membrane 41 c de manière à réduire le volume du réservoir 44c. Du fluide s'écoule à travers les conduits de liaisons 45a et 45b jusqu'aux réservoirs 44a et 44b de manière à dilater les membranes 41a et 41 b vers l'intérieur de l'armature externe 201, ce qui engendre une effort de serrage, indiqué par les flèches S, appliqué sur les lèvres de clapet 216a et 216b.

De même que dans le premier mode de réalisation, en présence de la sollicitation statique F, lorsque l'articulation est soumise à une sollicitation vibratoire, la circulation du liquide d'amortissement à travers les canaux de surpression 225a et 225b est restreinte par le serrage accru des lèvres de clapet 216a et 216b, de sorte que la circulation de liquide d'amortissement à travers les canaux résonants est favorisée.

Dans tous les modes de réalisation, la présence de canaux résonants reliant en permanence les chambres de liquide n'est pas nécessaire, car un amortissement satisfaisant, quoique différent, peut être obtenu en faisant passer tout le débit de liquide à travers les seuls canaux de surpression, pourvu que l'on règle les dimensions des canaux de surpression et, le cas échéant, la pression d'ouverture des lèvres de clapet, de manière appropriée. Par exemple, il peut être prévu un léger jeu entre chaque lèvre de clapet en position de repos et la paroi opposée du canal de surpression ou un tarage faible desdites lèvres de clapet.

Dans tous les modes de réalisation, la présence de lèvres de clapet n'est pas indispensable. En particulier, si l'on accepte un amortissement moindre aux basses fréquences, il n'est pas nécessaire de prévoir de lèvres de clapet ni de canal résonant séparé des canaux de surpression. Sans précharge, les canaux de surpression offrent alors un passage permanent pour le liquide entre les deux chambres. Cependant, sous une précharge, les différents modes de réalisation décrits permettent un rétrécissement de la partie à section variable des canaux de surpression, et donc un accroissement des pertes de charge dans les canaux de surpression, ayant pour effet une amélioration de l'amortissement de vibrations.

Un exemple de réalisation d'une articulation hydroélastique sans lèvres de clapet ni canal résonant peut être obtenu en modifiant de manière correspondante le mode de réalisation représenté sur la figure 5. Dans ce cas, il est approprié de supprimer les découpes 136a et 136b. En présence de la sollicitation statique F décalant l'armature interne 102 vers la chambre 117a et lorsque l'articulation est soumise à une sollicitation vibratoire, la circulation du liquide d'amortissement à travers les canaux de surpression 125a et 125b est gênée par l'organe 4b obturant l'entrée de ceux-ci, de sorte que l'amortissement visqueux est amélioré.

Lorsque des lèvres de clapet sont prévues, celles-ci peuvent revêtir une forme droite dans la direction radiale. La figure 12 représente, en vue partielle, une telle lèvre de clapet 416b, utilisée dans une réalisation alternative du mode de réalisation représenté sur la figure 5. La lèvre 416b est surmoulée sur l'armature noyée 107 et s'étend radialement vers la surface 110 de l'armature extérieure 101.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention revendiquée.

## Revendications

1. Articulation hydroélastique destinée à assembler deux pièces en amortissant des vibrations transmises entre l'une et l'autre, ladite articulation comportant une armature extérieure (1, 101, 201) et une armature intérieure (2, 102, 202) disposées l'une autour de l'autre et un élément élastiquement déformable (6, 106) agencé entre lesdites armatures de manière à permettre un déplacement relatif entre lesdites armatures, ledit élément élastiquement déformable étant conformé de manière à définir, entre lesdites armatures, un volume (9, 109, 209) contenant un liquide d'amortissement et comprenant au moins deux chambres (17a, 17b ; 117a, 117b; 217a, 217b) opposées selon une direction d'amortissement prédéfinie (B), lesdites chambres étant aptes à communiquer à travers au moins un canal de surpression (25a, 25b ; 125a, 125b ;225a, 225b) qui présente au moins une partie à section variable, **caractérisée par le fait qu'**elle comporte un moyen de renvoi d'effort (24, 4a-c, 46) pour engendrer, à partir d'un effort (F) tendant à décaler lesdites armatures l'une par rapport à l'autre selon ladite direction d'amortissement, un effort de serrage (P, S) au niveau de ladite partie à section variable dudit canal de surpression, pour s'opposer à la circulation de liquide d'amortissement à travers ledit canal de surpression.

2. Articulation hydroélastique selon la revendication 1, **caractérisée par le fait que** ladite partie à section variable du canal de surpression comporte une lèvre souple (16a, 16b ; 116a, 116b; 216a, 216b ; 316b ; 416b) de clapet de surpression s'étendant entre deux parois latérales opposées (10, 23a, 23b ; 35a, 35b, 123a, 123b, 110, 39 ; 41a, 41b) dudit canal de surpression de manière à n'ouvrir ledit canal de surpression que lorsque la différence de pression entre lesdites chambres dépasse un seuil d'ouverture, ledit effort de serrage (P, S) engendré par le moyen de renvoi d'effort étant apte à comprimer ladite lèvre de clapet entre lesdites parois latérales opposées du canal de surpression, pour accroître ledit seuil d'ouverture.

3. Articulation hydroélastique selon la revendication 1 ou 2, **caractérisée par le fait que** ladite partie à section variable du canal de surpression comporte une partie d'entrée dudit canal de surpression ayant une paroi latérale (132a, 132b) déplaçable par ledit moyen de renvoi d'effort de manière à obturer ladite partie d'entrée.

4. Articulation hydroélastique selon l'une des revendications 1 à 3, **caractérisée par le fait que** ledit moyen de renvoi d'effort comporte une surface (24) solidaire de ladite armature intérieure (2) et inclinée pour pousser de la matière dudit élément élastiquement déformable (6) transversalement par rapport à une direction de circulation définie par ledit canal de surpression (25a) lors d'un décalage relatif desdites armatures selon ladite direction d'amortissement.

5. Articulation hydroélastique selon la revendication 4, **caractérisée par le fait que** ladite surface inclinée (24) comporte une portion de la surface extérieure (11) de ladite armature intérieure.

6. Articulation hydroélastique selon la revendication 4 ou 5, **caractérisée par le fait qu'**elle comporte une armature noyée (7) dans ledit élément élastiquement déformable (6), ladite armature noyée présentant une ouverture (31) en face de ladite surface inclinée (24) du moyen de renvoi d'effort pour permettre un déplacement de la matière dudit élément élastiquement déformable poussée par ladite surface inclinée à travers ladite armature noyée.

7. Articulation hydroélastique selon l'une des revendications 1 à 3, **caractérisée par le fait que** ledit moyen de renvoi d'effort comporte un organe semi rigide (4a-c) en contact avec au moins l'une desdites chambres (117a), ledit organe comportant une zone de flexion (33, 133, 39, 233) apte à être mise en prise entre lesdites armatures extérieure et intérieure de manière à faire fléchir élastiquement ladite zone de flexion lorsque les armatures intérieure et extérieure sont décalées selon ladite direction d'amortissement, et au moins une zone de serrage (32a, 32b ; 132a, 132b, 39, 234) apte à pivoter de manière à réduire la section de ladite partie à section variable du canal de surpression (125a, 125b) en réponse à la flexion de ladite zone de flexion.

8. Articulation hydroélastique selon la revendication 7, **caractérisée par le fait que** ledit organe semi rigide comporte une feuille élastique ondulée (4a, 4b) sensiblement en forme d'un W dont une arche centrale (33, 133) fait saillie entre lesdites armatures extérieure et intérieure sensiblement parallèlement à ladite direction d'amortissement pour former ladite zone de flexion et dont au moins une aile latérale (32a, 32b ; 132a, 132b) forme ladite zone de serrage.

9. Articulation hydroélastique selon la revendication 7, **caractérisée par le fait que** lesdites armatures intérieure et extérieure sont sensiblement cylindriques et présentent une direction axiale commune (A), ledit organe semi rigide (4c) comportant une enveloppe cylindrique élastique (39) dont l'axe est sensiblement parallèle à ladite direction axiale commune et dont la zone de flexion est définie entre deux nervures (40) sensiblement axiales par lesquelles ladite enveloppe s'appuie contre une surface intérieure (110) de l'armature extérieure (101).

10. Articulation hydroélastique selon l'une des revendications 7 à 9, **caractérisée par le fait que** ladite zone de flexion (33, 133, 39, 233) est mise en prise entre ladite armature extérieure et un organe de butée (118a, 118b) porté par ladite armature intérieure en saillie selon ladite direction d'amortissement.

11. Articulation hydroélastique selon l'une des revendications 7 à 10, **caractérisée par le fait que** ladite zone de serrage de l'organe semi rigide forme une cloison latérale (32a, 32b, 132a, 132b, 39, 234) de ladite partie à section variable du canal de surpression.

12. Articulation hydroélastique selon la revendication 11, **caractérisée par le fait que** ladite cloison latérale (32a, 32b) porte une lèvre de clapet (116a, 116b) s'étendant vers une paroi latérale opposée (123a, 123b) dudit canal de surpression.

13. Articulation hydroélastique selon la revendication 11, **caractérisée par le fait qu'**une paroi latérale (123a, 123b) dudit canal de surpression opposée à ladite cloison latérale de l'organe semi rigide (4a, 4c) porte une lèvre de clapet (316a, 316b) et que ladite cloison latérale (32a, 32b, 39, 234) est apte à appuyer sur une extrémité libre de ladite lèvre de clapet pour comprimer ladite lèvre de clapet.

14. Articulation hydroélastique selon l'une des revendications 11 à 13, **caractérisée par le fait qu'**elle comporte un canal résonant (126a, 126b) s'étendant entre lesdites chambres en dérivation de l'autre côté de ladite cloison latérale (32a, 32b) par rapport audit canal de surpression (125a, 125b) et que ladite cloison latérale (32a, 32b, 35a, 35b) comporte une ouverture (36a, 36b) débouchant dans ledit canal résonant.

15. Articulation hydroélastique selon la revendication 14, **caractérisée par le fait que** ledit organe semi rigide (4a) est apte à faire varier en sens inverse de la section variable dudit canal de surpression une section dudit canal résonant (126a, 126b) définie entre ladite cloison latérale (35a, 35b) et ladite armature extérieure (101), de manière à accroître une fréquence de résonance dudit canal résonant lorsque les armatures intérieure et extérieure sont décalées selon ladite direction d'amortissement.

16. Articulation hydroélastique selon l'une des revendications 7 à 15, **caractérisée par le fait que** ledit élément élastiquement déformable (106) présente deux cloisons d'extrémité (13, 14) reliant de manière étanche lesdites armatures intérieure et extérieure au niveau d'extrémités opposées de celles-ci pour fermer ledit volume de liquide d'amortissement (109), ledit organe semi rigide (4a-c) étant conçu de manière à assurer une étanchéité sensible entre lesdites cloisons d'extrémité et des bords dudit organe semi rigide.

17. Articulation hydroélastique selon l'une des revendications 1 à 3, **caractérisée par le fait qu'**elle comporte une armature supplémentaire (42) agencée autour de ladite armature extérieure (201), ledit moyen de renvoi d'effort comportant un circuit hydraulique (46) défini entre ladite armature extérieure et ladite armature supplémentaire, ledit circuit hydraulique comportant un premier réservoir (44c) séparé d'une desdites chambres de fluide d'amortissement (217a) par une première membrane souple (41c) montée dans une première ouverture de ladite armature extérieure en face d'un organe de butée (218a) porté par ladite armature intérieure (202) en saillie selon ladite direction d'amortissement (B), et un second réservoir (44a, 44b) ayant une paroi formée par une seconde membrane souple (41 a, 41 b) montée dans une seconde ouverture de ladite armature extérieure, ladite seconde membrane souple formant une paroi latérale extérieure de ladite partie à section variable du canal de surpression (225a, 225b), ledit second réservoir étant relié audit premier réservoir de manière qu'une déformation de ladite première membrane vers l'extérieur sous la poussée (F) dudit organe de butée, entraîne par transmission de pression hydraulique une déformation vers l'intérieur (S) de ladite seconde membrane, pour restreindre la section dudit canal de surpression.

18. Articulation hydroélastique selon la revendication 17, **caractérisée par le fait qu'**elle comporte un second élément élastiquement déformable (43) agencé entre ladite armature supplémentaire (42) et ladite armature extérieure (201), ledit circuit hydraulique étant ménagé dans ledit second élément élastiquement déformable.

19. Articulation hydroélastique selon l'une des revendications 1 à 18, **caractérisée par le fait qu'**elle comporte au moins un canal résonant (26, 126a, 126b) reliant lesdites chambres (17a, 17b ; 117a, 117b ; 217a, 217b) en dérivation par rapport audit au moins un canal de surpression (25a, 25b ; 125a, 125b ; 225a, 225b).

## Claims

1. Hydroelastic joint designed to unite two components and damp vibrations transmitted between one and the other, the said joint comprising an outer shell (1, 101, 201) and an inner shell (2, 102, 202) arranged one around the other and an elastically deformable element (6, 106) arranged between the said shells so as to allow a relative displacement between the said shells, the said elastically deformable being shaped so that it defines between the shells a space (9, 109, 209) containing a damping liquid and comprising at least two chambers (17a, 17b; 117a, 117b; 217a, 217b) opposite one another in a predefined damping direction (B), the said chambers being able to communicate via at least one overpressure channel (25a, 25b; 125a, 125b; 225a, 225b) which has at least one part with a variable cross-section, **characterised in that** it comprises force return means (24, 4a-c, 46) to produce, from a force (F) which tends to displace the said shells relative to one another along the said damping direction, a tightening force (P, S) at the level of the said part of the said overpressure channel with variable cross-section, in order to oppose the circulation of damping liquid through the said overpressure channel.

2. Hydroelastic joint according to Claim 1, **characterised in that** the said variable cross-section part of the overpressure channel has a flexible flap (16a, 16b; 116a, 116b; 216a, 216b; 316a, 416b) of an overpressure valve that extends between two opposite sidewalls (10, 23a, 23b; 35a, 35b; 123a, 123b; 110, 39, 41a, 41b) of the said overpressure channel such that the overpressure channel is only opened when the pressure difference between the said chambers exceeds an opening threshold value, the said tightening force (P, S) produced by the force return means being able to compress the said valve flap between the said opposite sidewalls of the overpressure channel to increase the said opening threshold value.

3. Hydroelastic joint according to Claims 1 or 2, **characterised in that** the said variable-section part of the overpressure channel comprises an inlet portion of the overpressure channel having a sidewall (132a, 132b) that can be displaced by the said force return means so as to block the said inlet portion.

4. Hydroelastic joint according to either of Claims 1 to 3, **characterised in that** the said force return means comprises a surface (24) formed on the said inner shell (2) and inclined so as to push some of the material of the said elastically deformable element (6) transversely relative to a circulation direction defined by the said overpressure channel (25a) during a relative displacement of the said shells in the said damping direction.

5. Hydroelastic joint according to Claim 4, **characterised in that** the said inclined surface (24) comprises part of the outer surface (11) of the said inner shell.

6. Hydroelastic joint according to Claims 4 or 5, **characterised in that** it comprises an embedded reinforcement (7) in the said elastically deformable element (6), the said embedded reinforcement having an opening (31) opposite the said inclined surface (24) of the force return means to allow a displacement of the material of the said elastically deformable element pushed by the said inclined surface through the said embedded reinforcement.

7. Hydroelastic joint according to Claims 1 to 3, **characterised in that** the said force return means comprises a semi-rigid body (4a-c) in contact with at least one of the said chambers (117a), this body having a flexure zone (33, 133, 39, 233) able to be held between the said outer and inner shells so as to cause the said flexure zone to bend elastically when the inner and outer shells are displaced along the said damping direction, and at least one tightening zone (32a, 32b; 132a, 132b; 39, 234) able to pivot so as to reduce the cross-section of the said variable-section part of the overpressure channel (125a, 125b) in response to the bending of the said flexure zone.

8. Hydroelastic joint according to Claim 7, **characterised in that** the said semi-rigid body comprises an elastic undulating sheet (4a, 4b) essentially in the shape of a W, a central arch (33, 133) of which projects between the said outer and inner shells essentially parallel to the said damping direction to form the said flexure zone and at least one side wing (32a, 32b; 132a, 132b) of which forms the said tightening zone.

9. Hydroelastic joint according to Claim 7, **characterised in that** the said inner and outer shells are essentially cylindrical and have a common axial direction (A), the said semi-rigid body (4c) comprising a cylindrical elastic envelope (39) whose axis is essentially parallel to the said common axial direction and whose flexure zone is defined between two essentially axial rides (40) on which the said envelope rests against an inside surface (110) of the outer shell (101).

10. Hydroelastic joint according to any of Claims 7 to 9, **characterised in that** the said flexure zone (33, 133, 39, 233) is held between the outer shell and an abutment body (118a, 118b) on the inner shell which projects in the said damping direction.

11. Hydroelastic joint according to any of Claims 7 to 10, **characterised in that** the said tightening zone of the semi-rigid body forms a lateral partition (32a, 32b; 132a, 132b; 39, 234) of the said variable-section part of the overpressure channel.

12. Hydroelastic joint according to Claim 11, **characterised in that** the said lateral partition (32a, 32b) carries a valve flap (116a, 116b) that extends towards the opposite sidewall (123a, 123b) of the said overpressure channel.

13. Hydroelastic joint according to Claim 11, **characterised in that** a sidewall (123a, 123b) of the overpressure channel opposite the said lateral partition of the semi-rigid body (4a, 4c) carries a valve flap (316a, 316b) and the said lateral partition (32a, 32b; 39, 234) can contact a free end of the said valve flap so as to compress the said valve flap.

14. Hydroelastic joint according to any of Claims 11 to 13, **characterised in that** it comprises a resonance channel (126a, 1256b) extending between the said chambers and bypassing the other side of the said lateral partition (32a, 32b) relative to the said overpressure channel (125a, 125b), and the said lateral partition (32a, 32b, 35a, 35b) has an opening (36a, 36b) which opens into the said resonance channel.

15. Hydroelastic joint according to Claim 14, **characterised in that** the said semi-rigid body (4a) can cause a section of the said resonance channel (126a, 126b) defined between the said lateral partition (35a, 35b) and the outer shell (101) to vary in the sense inverse to the variable cross-section of the said overpressure channel, so as to increase a resonance frequency of the said resonance channel when the inner and outer shells are displaced along the said damping direction.

16. Hydroelastic joint according to any of Claims 7 to 15, **characterised in that** the said elastically deformable element (106) has two end portions (13, 14) which hermetically connect the said inner and outer shells at the level of opposite ends thereof to enclose the said volume of damping liquid (109), the said semi-rigid body (4a-c) being designed so as to ensure an essentially leakproof seal between these end partitions and the edges of the said semi-rigid body.

17. Hydroelastic joint according to any of Claims 1 to 3, **characterised in that** it comprises an additional shell (42) arranged around the said outer shell (201) and the said force return means comprises a hydraulic circuit (46) defined between the said outer shell and the said additional shell, the said hydraulic circuit comprising a first reservoir (44c) separated from one of the said damping fluid chambers (217a) by a first flexible membrane (41c) mounted in a first opening of the said outer shell opposite an abutment body (218a) on the said inner shell (202) which projects in the said damping direction (B), and a second reservoir (44a, 44b) having a wall formed by a second flexible membrane (41 a, 41 b) mounted in a second opening of the outer shell, this second flexible membrane forming an outer sidewall of the said variable-section part of the overpressure channel (225a, 225b), the said second reservoir being connected to the said first reservoir so that an outward deformation of the first membrane under the pressure (F) of the said abutment body results, by transmission of hydraulic pressure, in an inward deformation (S) of the second membrane, which constricts the cross-section of the said overpressure channel.

18. Hydroelastic joint according to Claim 17 **characterised in that** it comprises a second elastically deformable element (43) arranged between the said additional shell (42) and the said outer shell (201), and the said hydraulic circuit is formed within this second elastically deformable element.

19. Hydroelastic joint according to any of Claims 1 to 18, **characterised in that** it comprises at least one resonance channel (26, 126a, 126b) that connects the said chambers (17a, 17b; 117a, 117b; 217a, 217b) in parallel arrangement with the said at least one overpressure channel (25a, 25b; 125a, 125b; 225a, 225b).

## Patentansprüche

1. Hydroelastisches Gelenk, das dazu vorgesehen ist, zwei Teile zu verbinden und gleichzeitig die Vibrationen, die von einem Teil zum anderen Teil übertragenen werden, zu dämpfen, wobei das Gelenk einen äußeren Mantel (1, 101, 201) und einen inneren Mantel (2, 102, 202), wobei ein Mantel um den anderen herum angeordnet ist, und ein elastisch verformbares Element (6, 106) aufweist, welches derart zwischen den Mänteln angeordnet ist, dass eine Bewegung der Mäntel relativ zueinander möglich ist, wobei das elastisch verformbare Element so ausgeführt ist, dass es zwischen den Mänteln einen Raum (9, 109, 209) definiert, welcher eine Dämpfungsflüssigkeit enthält und zumindest zwei Kammern (17a, 17b; 117a, 117b; 217a, 217b) aufweist, die sich in einer vorbestimmten Dämpfungsrichtung (B) gegenüberliegen, wobei die Kammern befähigt sind, miteinander über zumindest einen Überdruckkanal (25a, 25b; 125a, 125b; 225a, 225b) in Verbindung zu stehen, welcher zumindest einen Abschnitt mit variablem Querschnitt aufweist, **dadurch gekennzeichnet, dass** es ein Kraftumleitungsmittel (24, 4a-c, 46) aufweist, das ausgehend von einer Kraft (F), die letztlich die Mäntel in Bezug auf einander in der Dämpfungsrichtung verschiebt, in dem Bereich des Abschnitts mit variablem Querschnitt des Überdruckkanals eine Klemmkraft (P, S) erzeugt, um der Zirkulation der Dämpfungsflüssigkeit durch den Überdruckkanal entgegenzuwirken.

2. Hydroelastisches Gelenk nach Anspruch 1, **dadurch gekennzeichnet, dass** der Abschnitt des Überdruckkanals mit variablem Querschnitt eine nachgiebige Lippe (16a, 16b; 116a, 116b; 216a, 216b; 316b; 416b) eines Überdruckventil aufweist, welche sich zwischen zwei gegenüberliegenden Seitenwänden (10, 23a, 23b; 35a, 35b, 123a, 123b, 110, 39; 41a, 41b) des Überdruckkanals derart erstreckt, dass sich der Überdruckkanal erst dann öffnet, wenn eine Druckdifferenz zwischen den Kammern einen Öffnungsschwellwert überschreitet, wobei die Klemmkraft (P, S) die durch das Kraftumleitungsmittel erzeugt wird, geeignet ist, die Lippe des Ventils zwischen den gegenüberliegenden Seitenwänden des Überdruckkanals zusammenzudrücken, um den Öffnungsschwellwert zu erhöhen.

3. Hydroelastisches Gelenk nach Anspruch 1 oder 2, **dadurch gekennzeichnet, dass** der Abschnitt des Überdruckkanals mit variablem Querschnitt einen Einlassbereich des Überdruckkanals aufweist, welcher eine Seitenwand (132a, 132b) hat, die mit dem Kraftumleitungsmittel derart verschiebbar ist, dass der Einlassbereich verschlossen wird.

4. Hydroelastisches Gelenk nach einem der Ansprüche 1 bis 3, **dadurch gekennzeichnet, dass** das Kraftumleitungsmittel eine Oberfläche (24) aufweist, die mit dem inneren Mantel (2) formschlüssig verbunden ist, und die geneigt ist, um bei einer Relativverschiebung der Mäntel in Dämpfungsrichtung Material des elastisch verformbaren Elements (6), bezogen auf eine Strömungsrichtung, die durch den Überdruckkanal (25a) definiert wird, in Querrichtung zu drücken.

5. Hydroelastisches Gelenk nach Anspruch 4, **dadurch gekennzeichnet, dass** die geneigte Oberfläche (24) einen Teil der äußeren Oberfläche (11) des inneren Mantels umfasst.

6. Hydroelastisches Gelenk nach Anspruch 4 oder 5, **dadurch gekennzeichnet, dass** es eine dem elastisch verformbaren Element (6) eingebettete Verstärkung (7) aufweist, wobei die eingebettete Verstärkung gegenüber der geneigten Oberfläche (24) des Kraftumleitungsmittels eine Öffnung (31) aufweist, um eine Verschiebung des Materials des elastisch verformbaren Elements zu erlauben, das durch die geneigte Oberfläche gegen die eingebettete Verstärkung gedrückt wird.

7. Hydroelastisches Gelenk nach einem der Ansprüche 1 bis 3, **dadurch gekennzeichnet, dass** das Kraftumleitungsmittel ein halbstarres Element (4a-c) umfasst, welches mit zumindest einer der Kammern (117a) in Kontakt steht, wobei das Element einen Biegebereich (33, 133, 39, 233), der so ausgebildet ist, dass er derart zwischen dem äußeren und dem inneren Mantel angeordnet wird, dass der Biegebereich elastisch gebogen wird, wenn der innere und der äußere Mantel in der Dämpfungsrichtung gegeneinander verschoben werden, und zumindest einen Klemmbereich (32a, 32b; 132a, 132b, 39, 234) aufweist, der so drehbar ist, dass als Reaktion auf die Biegung des Biegebereichs in dem Bereich mit variablem Querschnitt des Überdruckkanals (125a, 125b) der Querschnitt verringert wird.

8. Hydroelastisches Gelenk nach Anspruch 7, **dadurch gekennzeichnet, dass** das halbstarre Element ein im Wesentlichen in Form eines W gewelltes, elastisches Blatt (4a, 4b) mit einem zentralen Bogen (33, 133), welcher zwischen dem äußeren und dem inneren Mantel im Wesentlichen parallel zur Dämpfungsrichtung hervorsteht, um den Biegebereich zu bilden, und zumindest einen seitlichen Flügel (32a, 32b; 132a, 132b) umfasst, der den Klemmbereich bildet.

9. Hydroelastisches Gelenk nach Anspruch 7, **dadurch gekennzeichnet, dass** der innere und der äußere Mantel im Wesentlichen zylindrisch sind und eine gemeinsame axiale Richtung (A) aufweisen, wobei das halbstarre Element (4c) eine elastische, zylindrische Hülle (39) aufweist, deren Achse im Wesentlichen parallel zu der gemeinsamen Richtung ist, und deren Biegebereich, zwischen zwei im Wesentlichen axialen Rippen (40) definiert wird, durch welche sich die Hülle gegen eine innere Oberfläche (110) dem äußeren Mantel (101) stützt.

10. Hydroelastisches Gelenk nach einem der Ansprüche 7 bis 9, **dadurch gekennzeichnet, dass** der Biegebereich (33, 133, 39, 233) in der Dämpfungsrichtung zwischen dem äußeren Mantel und einem Anschlagelement (118a, 118b), welches an dem inneren Mantel hervorsteht, eingebracht ist.

11. Hydroelastisches Gelenk nach einem der Ansprüche 7 bis 10, **dadurch gekennzeichnet, dass** der Klemmbereich des halbstarren Elements eine seitliche Wand (32a, 32b, 132a, 132b, 39, 234) des Bereichs des Überdruckkanals mit variablem Querschnitt bildet.

12. Hydroelastisches Gelenk nach Anspruch 11, **dadurch gekennzeichnet, dass** an der seitlichen Wand(32a, 32b) eine Ventillippe (116a, 116b) angeordnet ist, die sich in Richtung einer dem Überdruckkanal gegenüberliegenden Seitenwand (123a, 123b) erstreckt.

13. Hydroelastisches Gelenk nach Anspruch 11, **dadurch gekennzeichnet, dass** an einer Seitenwand (123a, 123b) des Überdruckkanals, die der seitlichen Wand des halbstarren Elements (4a, 4c) gegenüber liegt, eine Ventillippe (316a, 316b) angeordnet ist, und dass die seitliche Wand (32a, 32b, 39, 234) geeignet ist, auf einen freien Endbereich der Ventillippe zu drücken, um die Ventillippe zu komprimieren.

14. Hydroelastisches Gelenk nach einem der Ansprüche 11 bis 13, **dadurch gekennzeichnet, dass** es einen Resonanzkanal (126a, 126b) umfasst, der sich zwischen den Kammern als Bypass, auf der, bezogen auf den Überdruckkanal (125a, 125b), anderen Seite der seitlichen Wand(32a, 32b) erstreckt und dass die seitliche Wand (32a, 32b, 35a, 35b) eine Öffnung (36a, 36b) umfasst, die in den Resonanzkanal mündet.

15. Hydroelastisches Gelenk nach Anspruch 14, **dadurch gekennzeichnet, dass** das halbstarre Element (4a) geeignet ist, den Querschnitt des Resonanzkanals (126a, 126b), welcher zwischen der seitlichen Wand(35a, 35b) und dem äußeren Mantel (106) definiert ist, umgekehrt zum variablen Querschnitt des Überdruckkanals derart zu variieren, dass die Resonanzfrequenz des Resonanzkanals verstärkt wird, wenn der innere und der äußere Mantel in der Dämpfungsrichtung verschoben werden.

16. Hydroelastisches Gelenk nach einem der Ansprüche 7 bis 15, **dadurch gekennzeichnet, dass** das elastisch verformbare Element (106) zwei End-Trennwände (13, 14) aufweist, welche den inneren und den äußeren Mantel im Bereich ihrer gegenüberliegenden Endstücke dichtend miteinander verbinden, um den Raum der Dämpfungsflüssigkeit (109) abzuschließen, wobei das halbstarre Element (4a-c) so ausgeführt ist, dass eine annähernde Dichtigkeit zwischen den End-Trennwänden und den Rändern des halbstarren Elements sichergestellt wird.

17. Hydroelastisches Gelenk nach einem der Ansprüche 1 bis 3, **dadurch gekennzeichnet, dass** es einen zusätzlichen Mantel (42) umfasst, welcher um den äußeren Mantel (201) herum angeordnet ist, wobei das Kraftumleitungsmittel einen hydraulischen Kreislauf (46) aufweist, welcher durch den äußeren Mantel und den zusätzlichen Mantel definiert wird, wobei der hydraulische Kreislauf ein erstes Reservoir (44c) umfasst, welches von einer der Kammern der Dämpfungsflüssigkeit (217a) über eine erste nachgiebige Membran (41c) getrennt ist, wobei die Membran in einer ersten Öffnung des äußeren Mantel, vor einem Anschlagelement (218a) eingebracht ist, welches an dem inneren Mantel (202) vorspringend in der Dämpfungsrichtung (B) vorgesehen ist, und ein zweites Reservoir (44a, 44b), das eine Wandung hat, die durch eine zweite, nachgiebige Membran (41a, 41b) gebildet wird, und in einer zweiten Öffnung des äußeren Mantel eingebracht ist, wobei die zweite nachgiebige Membran eine äußere seitliche Wandung des Abschnitts mit variablem Querschnitt des Überdruckkanals (225a, 225b) bildet und das zweite Reservoir derart mit dem ersten Reservoir verbunden ist, dass eine Verformung der ersten Membran nach außen hin, die durch die Einwirkung der Kraft (F) des Anschlagelements bedingt ist, durch die Übertragung des hydraulischen Drucks eine Verformung der zweiten Membran nach innen (S) verursacht, um den Querschnitt des Überdruckkanals zu verringern.

18. Hydroelastisches Gelenk gemäß Anspruch 17, **dadurch gekennzeichnet, dass** es ein zweites, elastisch verformbares Element (43) umfasst, welches zwischen dem zusätzlichen Mantel (42) und dem äußeren Mantel (201) angeordnet ist, wobei der hydraulische Kreislauf in dem zweiten elastisch verformbaren Element vorgesehen ist.

19. Hydroelastisches Gelenk gemäß einem der Ansprüche 1 bis 18, **dadurch gekennzeichnet, dass** es zumindest einen Resonanzkanal (26, 126a, 126b) aufweist, welcher die Kammern (17a, 17b; 117a, 117b; 217a, 217b) bezüglich zumindest eines Überdruckkanals (25a, 25b; 125a, 125b; 225a, 225b) als Bypass verbindet.
